Europäisches Patentamt

European Patent Office

Office européen des brevets

(19)

(11) Veröffentlichungsnummer: **0 157 204**
**B1**

(12) **EUROPÄISCHE PATENTSCHRIFT**

(45) Veröffentlichungstag der Patentschrift:
**13.07.88**

(21) Anmeldenummer: **85102490.1**

(22) Anmeldetag: **06.03.85**

(51) Int. Cl.⁴: **F 16 L 23/02**, F 16 L 19/08

(54) Klemmelement.

(30) Priorität: **17.03.84 DE 8408265 U**

(43) Veröffentlichungstag der Anmeldung:
**09.10.85 Patentblatt 85/41**

(45) Bekanntmachung des Hinweises auf die Patenterteilung:
**13.07.88 Patentblatt 88/28**

(84) Benannte Vertragsstaaten:
**CH DE FR GB IT LI**

(56) Entgegenhaltungen:
**DE - A - 2 333 686**
**DE - B - 1 066 065**
**GB - A - 1 479 499**

(73) Patentinhaber: **Agintec AG, Schindellegistrasse 75,
CH-8808 Pfäffikon (CH)**

(72) Erfinder: **Maier, Hans Paul, Wilhelmstrasse 34,
D-7730 Villingen-Schwenningen (DE)**
Erfinder: **Vlaykowski, Nikolay, In der Muslem 1/1,
D-7730 Villingen-Schwenningen (DE)**

(74) Vertreter: **Gramm, Werner, Prof. Dipl.-Ing. et al,
Patentanwälte Gramm + Lins
Theodor-Heuss-Strasse 2, D-3300 Braunschweig (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Rohrverbindung zwischen zwei stumpf miteinander zu verbindenden Rohrenden, mit einem lose auf das eine Rohrende aufgeschobenen Flansch oder dergleichen, der axial gegen ein Widerlager verspannbar ist und eine Klemmkammer aufweist, in die ein Klemmelement eintaucht, das sich mit einem radial innenliegenden Klemmrand auf dem Rohrende abstützt, hinsichtlich eines radial außenliegenden Klemmrandes von einer Klemmfläche der Klemmkammer übergriffen wird und in axialer Richtung so ausgeformt ist, daß eine das Klemmelement beaufschlagende axiale Druckkraft zu einer Vergrößerung des Außendurchmessers und zu einer Verkleinerung des Innendurchmessers des Klemmelementes führt.

Die vorstehend beschriebene Rohrverbindung läßt sich der EP-A-0 087 702 entnehmen. Diese Rohrverbindung läßt sich auf glatten, lediglich entgrateten Rohrenden montieren, wobei als einzige Montagehilfe passende Schlüssel für die Verschraubungen benötigt werden. Auch die Demontage der Rohrverbindung ist sehr einfach. Diese Konstruktion hat sich in der Praxis insbesondere bei der Abdichtung gegenüber hohen Drücken bewährt.

Bei dieser vorbekannten Konstruktion besteht jedes Klemmelement aus zumindest einer konvex ausgebildeten Scheibe, die z. B. als Tellerfeder oder aber als gezahntes scheibenförmiges Klemmelement ausgebildet sein kann. Der radial innenliegende Klemmrand jedes Klemmelementes kann angeschärft sein, um so beim Verspannen der Rohrverbindung zusätzlich zu der kraftschlüssigen Verbindung einen leichten Formschluß zwischen Klemmelement und Rohraußenwandung zu bilden.

Eine vergleichbare Rohrverbindung läßt sich auch der französischen Patentschrift 2 237 102 entnehmen. Hier sind die Klemmelemente als verhältnismäßig schmale Klemmringe ausgebildet, deren ringförmiger Teil unter einem Winkel von etwa 30° zu der Ebene des Klemmelementes geneigt ist. Untersuchungen haben jedoch ergeben, daß Klemmelemente mit einer so großen Schrägstellung beim Anziehen der Rohrverbindung in der Regel aus dem elastischen in den plastischen Bereich übertreten, so daß die eigentliche Funktion der Klemmelemente nach der Montage nicht mehr gewährleistet werden kann. Außerdem benötigt eine derartige Schrägstellung sehr hohe, durch die Schraubverbindungen aufzubringende Kräfte, die zu einer im Verhältnis zu den Einsatzgebieten derartiger Rohrverbindungen überdimensionierten Schraubverbindung zwingt.

Probleme mit der eingangs erläuterten Rohrverbindung ergeben sich auch dann, wenn die miteinander zu verbindenden Rohre aus einem spröden Werkstoff, z. B. aus phenolhaltigen Harzen mit Füllstoffen bestehen. Der sich beim Anziehen der Rohrverbindung in die Rohroberfläche eindrückende innenliegende Klemmrand der Klemmelemente führt bisweilen zu Bruchbildungen am Rohrkörper.

Der Erfindung liegt die Aufgabe zugrunde, für die in der Praxis mit großem Erfolg eingesetzte, eingangs beschriebene Rohrverbindung neue Klemmelemente zu entwickeln, die einen erweiterten Anwendungsbereich der Rohrverbindung ermöglichen.

Diese Aufgabe wird gemäß der Erfindung dadurch gelöst, daß der ringförmige Teil des Klemmelementes im Querschnitt ein bogenförmiges Profil aufweist.

Dabei kann das bogenförmige Profil durch einen Radius bestimmt sein und ein Kreisringsegment gleicher Dicke bilden.

Mit einem derartigen Klemmelement erhält man pro Radius-Biegung in Abhängigkeit von der Bauhöhe einen rechnerisch zu bestimmenden Hub. Dieser läßt sich aber noch wesentlich dadurch vergrößern, daß das bogenförmige Profil zu der Ebene des Klemmelementes unter einem spitzen Winkel geneigt angeordnet wird. Mit derartigen Klemmelementen läßt sich ein beträchtlich größerer Hub bei sehr kleiner Bauhöhe erreichen. Der genannte Neigungswinkel kann dabei nur beispielsweise 15° betragen.

In der DE-B-1 066 065 ist eine Rohrverbindung mit einem plastisch verformbaren metallischen Dichtungsring offenbart, der zwischen einer hohlkonischen Schulter einer Überwurfmutter und einer hohlkonischen Gegenfläche beim Anziehen der Überwurfmutter axial unter Pressung gesetzt wird. Dadurch wird der metallische Dichtungsring in seinem dem Rohrende zugekehrten vorderen Bereich durch Umbiegen zur Rohrwand radial verengt und gelangt in Berührung mit der Rohroberfläche. Im Bereich des Rohrstoßes ist keine Dichtung vorgesehen. Der Dichtungsring hat die Form einer schmalen Buchse, die an einer Stirnseite kappenartig vorgeformt sein kann. Bei dieser Ausführungsform nimmt der Durchmesser über die eine Längenhälfte kontinuierlich etwas ab. Dadurch ergibt sich ein etwas abgerundeter Konus, der in diesem Bereich die bei dieser Konstruktion erwünschte radiale Verengung des Stirnbereichs beim Anziehen der Überwurfmutter erleichtert. Der Dichtungsring soll durch Anziehen der Überwurfmutter zwischen den beiden konischen Flächen so verformt werden, daß sich der eine Stirnbereich des Dichtungsringes radial verengt, bis seine Innenkante auf das Rohr auftrifft und hier einen so hohen spezifischen Flächendruck erzeugt, daß eine plastische Verformung des Metalls eintritt. Beim Fließvorgang sollen dann alle Poren, Riefen und Unebenheiten der Rohroberfläche ausgefüllt werden, so daß im Endzustand die Festigkeit der Verbindung der einer Hartlötung vergleichbar ist.

Der Dichtungsring weist zwar im Querschnitt ebenfalls ein bogenförmiges Profil auf, ist jedoch weder hinsichtlich der Aufgabenstellung noch hinsichtlich der Wirkungsweise vergleichbar mit dem erfindungsgemäßen Klemmelement, das keine Dichtungsfunktion zu erfüllen hat, sondern etwaige auf das Rohrende in axialer Richtung wirkende Zugkräfte über den innenliegenden Klemmrand aufnimmt und über seinen radial außenliegenden Klemmrand auf den die Klemmkammer aufweisenden Flansch überträgt.

Bei einer anderen Lösung gemäß der Erfindung kann der ringförmige Teil des Klemmelementes aus einem äußeren Kreisring konstanter Breite bestehen, an dem nach innen gerichtete, angenähert tan-

gential zum lichten Innendurchmesser des Klemmelementes verlaufende Laschen hängen, die sich zu ihrem freien Ende hin keilförmig verjüngen können. Diese Laschen können sich entsprechend der Federkennlinie des Werkstoffes des Klemmelementes dem Rohraußendurchmesser gut anpassen. Der Federdruck, der sich je nach Schrägstellung der Schlitze mit unterschiedlicher Kraft auf das Rohr auswirkt, kann verhältnismäßig weich eingestellt werden und kommt so spröden bzw. harten Rohrmaterialien, z.B. Kunststoff-Rohren, entgegen. Vorteile ergeben sich auch beim Einsatz weicher, z.B. aus PVC-Werkstoffen bestehenden Rohren.

Der ringförmige Teil des Klemmelementes kann an seinem Außenumfang durch Schlitze gebildete Laschen tragen, die vorzugsweise angenähert tangential zum Außendurchmesser des Klemmelementes verlaufen. Bei derartigen Klemmelementen kann es vorteilhaft sein, wenn jeweils ein radial außenliegender Schlitz mit einem radial innenliegenden Schlitz pfeilspitzartig zusammenläuft, wobei die so gebildeten äußeren und inneren Laschen nur im Bereich der Pfeilspitze in Umfangsrichtung aneinander hängen. Die einander zugeordneten Schlitze können dabei einen Winkel von etwa 120° einschließen. Diese Klemmelemente eignen sich insbesondere für stark unrunde Rohre sowie für solche Rohre, die wegen ihrer Innenbeschichtung oder aber Dünnwandigkeit nur duch geringe mechanische Kräfte belastet werden dürfen. Bei diesen Klemmelementen kann der die Pfeilspitze bildende Mittelsteg als Sollbruchstelle ausgebildet sein, wobei dann die einzelnen winkelförmig angeordneten Schenkel jeweils ein Klemmelement mit federndem Charakter bilden. Solche Klemmelemente können auch in zwei Hälften geteilt und an solchen Rohren eingesetzt werden, die bereits bei der Montage gegen mechanische Einwirkungen empfindlich sind.

Der ringförmige Teil eines Klemmelementes kann auch aus einem schmalen äußeren Kreisring bestehen, an dem nach innen gerichete Radiallaschen hängen. Derartige Klemmelemente, die ausschließlich nach innen verlaufende Radialschlitze aufweisen können, erfordern relativ hohe Anzugsmomente beim Verspannen der Rohrverbindungen. Die radial auf die Flanschteile bzw. Kammerteile wirkenden Kräfte sind bei derartigen Rohrverbindungen gering. Dies ist insbesondere vorteilhaft bei aus sprödem Werkstoff, z.B. Aluminium oder Kunststoff, bestehenden Kammer- bzw. Flanschteilen.

In einer abgewandelten Ausführungsform kann der ringförmige Teil eines Klemmelementes sowohl innere Radialschlitze als auch jeweils dazwischen angeordnete äußere Einschnitte aufweisen. Hierbei ist es vorteilhaft, wenn die Länge der Radialschlitze um ein Mehrfaches größer ist als die Radialtiefe der Einschnitte.

Diese Klemmelemente erfordern geringere Anzugsmomente beim Verspannen der Rohrverbindungen, jedoch sind die Radialkräfte auf die Kammer- bzw. Flanschteile erheblich, und zwar vor allem bei Rohraußendurchmessern im Plus-Toleranzbereich. Diese Klemmelemente sind für Flansch- bzw. Kammerteile für zähe Werkstoffe, beispielsweise gemäß DIN 17100, geeignet.

Insbesondere bei nur mit inneren Radialschlitzen versehenen Klemmelementen kann es vorteilhaft sein, wenn der ringförmige Teil an einer Stelle aufgeschnitten ist. Derartige Klemmelemente lassen sich z.B. für emaillierte Stahlrohre verwenden, da das Email um den Rohrmantel herumgezogen ist und dadurch zu einer Durchmesservergrößerung des Rohrmantels führt. Würden hierfür Standard-Klemmelemente Verwendung finden, würde die Emailschicht am äußeren Rohrmantel beschädigt. Aufgeschnittene Klemmelemente finden auch bei beschichteten Rohren Verwendung.

Als Werkstoff kann für die Klemmelemente ein Stahl der Qualität CK 75 verwendet werden. Der Werkstoff wird vorzugsweise durch Warmbehandlung zwischenstufenvergütet. Es läßt sich auch Kaltband bis C 95 verwenden.

In der Zeichnung sind eine vorbekannte Ausführungsform sowie zwei als Beispiele dienede Ausführungsformen der Erfindung dargestellt. Es zeigen:

Figur 1 eine bekannte, in der Montage befindliche Rohrverbindung;

Figur 2 einen Längsschnitt durch die obere Hälfte eines Rohres, auf das verschiedene Klemmelemente aufgeschoben sind;

Figur 3 in einer abgewandelten Ausführungsform ein Klemmelement in Draufsicht;

Figur 4 einen Querschnitt durch das Klemmelement gemäß Figur 3;

Figur 5 eine abgewandelte Ausführungsform in einer Darstellung gemäß Figur 3;

Figur 6 einen Querschnitt durch das in Figur 5 dargestellte Klemmelement;

Figur 7 eine abgewandelte Ausführungsform in einer Darstellung gemäß den Figuren 3 und 5;

Figur 8 einen Querschnitt durch ein Klemmelement gemäß Figur 7;

Figur 9 eine abgewandelte Ausführungsform in einer Darstellung gemäß Figur 7 und

Figur 10 einen Querschnitt durch ein Klemmelement gemäß Figur 9.

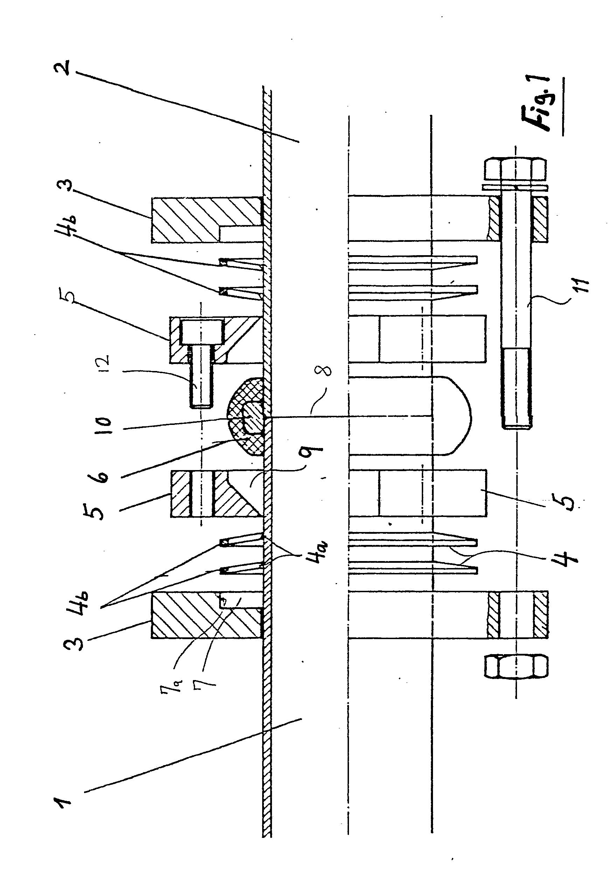

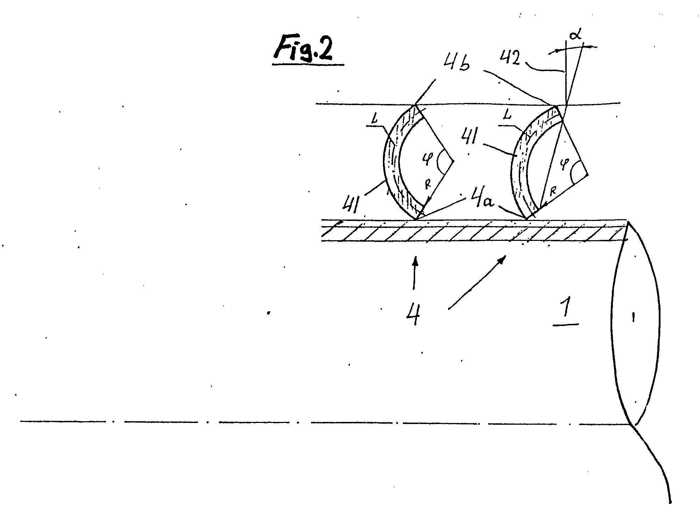

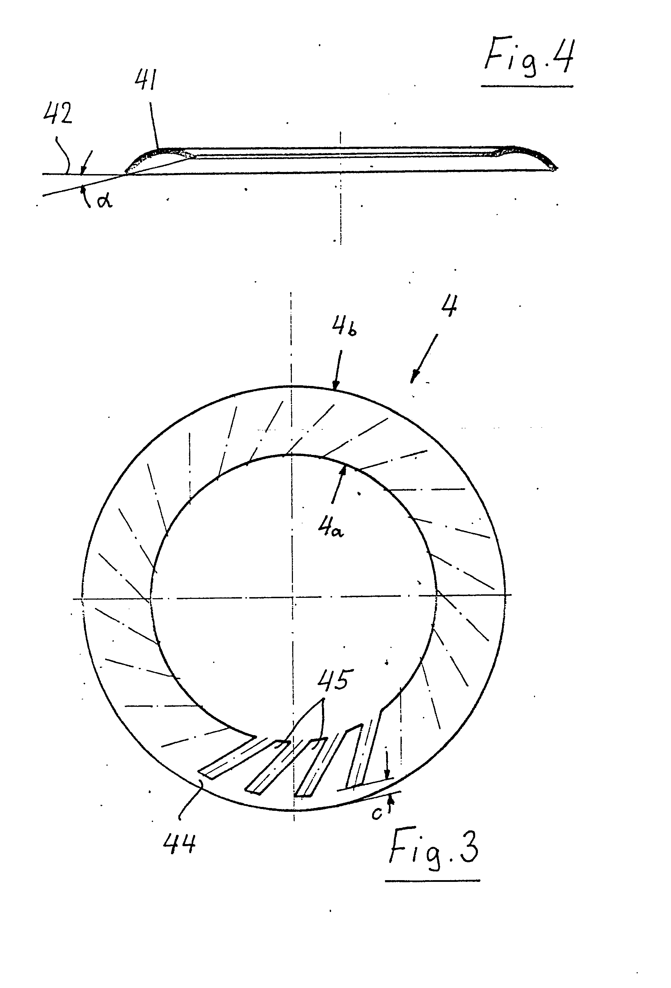

Die in Fig. 1 dargestellte Rohrverbindung entspricht der der EP-A-0 087 702 und dient lediglich zur Erläuterung einer geeigneten Rohrverbindung, für die die in den Fig. 2 und 3 dargestellten erfindungsgemäßen Klemmelemente bestimmt sind.

Zur Herstellung einer Rohrverbindung gemäß Fig. 1 werden auf zwei stumpf miteinander zu verbindende Rohrenden 1, 2 jeweils zuerst ein Flansch 3, zwei Klemmelemente 4, ein Kammerteil 5 sowie für beide Rohrenden 1, 2 gemeinsam eine Dichtung 6 aufgeschoben.

Der Flansch 3 weist eine kreisringförmige Klemmkammer 7 auf, die zum Verbindungsstoß 8 hin offen ist. In diese Klemmkammer 7 werden die beiden Klemmelemente 4 eingeschoben, die aus einer konvex ausgebildeten Scheibe bestehen, sich mit einem radial innenliegenden Klemmrad 4a auf dem Rohrende 1 bzw. 2 abstützen und hinsichtlich eines radial außenliegenden Klemmrandes 4b von einer ringförmigen Klemmfläche 7a der Klemmkammer 7 übergriffen werden. In entlastetem Zustand ragt das jeweils zweite Klemmelement 4 über die Stirnfläche des zugeordneten Flansches 3 hinaus. Die Ausbildung der Klemmelemente 4 ist dabei so gewählt, daß eine die Klemmelemente in axialer Richtung gegen die Rückseite der zugeordneten Klemmkammer 7 drückende Kraft zu einer Vergrößerung des Außendurchmessers und gleichzeitig zu einer Verkleinerung des Innendurchmessers des Klemmelementes führt.

Das Kammerteil 5 weist eine angenähert dreiecksförmige Außenkontur auf und ist mit einer jeweils zum Verbindungsstoß 8 hin offenen Dichtungskammer 9 versehen, die im dargestellten Ausführungsbeispiel konusförmig ausgebildet ist, sich also in Richtung auf den benachbarten Flansch 3 verjüngt.

Der Verbindungsstoß 8 wird von der Dichtung 6 umschlossen, die als Elastomer-Formdichtung ausgebildet ist, in die ein Innenring 10 aus hartem und/ oder plastischem Werkstoff, z.B. Metall, eingebettet ist. Die Außenkontur der Dichtung 6 entspricht etwa der der beiden Dichtungskammern 9 in den Kammerteilen 5, weist jedoch ein Übermaß auf, so daß ein Gegeneinanderdrücken der beiden Kammerteile 5 die Dichtung mit einem Druck beaufschlagt, der axial und radial nach innen gerichtet ist.

Um die beiden Flansche 3 gegeneinander verspannen zu können, sind z.B. drei gleichmäßig am Flanschumfang verteilt angeordnete Schraubbolzen 11 vorgesehen, während zum Verspannen der beiden Kammerteile 5 drei Inbusschrauben 12 angeordnet sind.

Zur Montage der in Figur 1 dargestellten Rohrverbindung werden zuerst die beiden Kammerteile 5 über die Inbusschrauben 12 miteinander verschraubt, nachdem die Dichtung 6 genau über den Verbindungsstoß 8 geschoben worden ist. Anschließend werden die Klemmelemente 4 auf Anschlag gegen die Kammerteile 5 und dann die Flansche 3 auf Anschlag gegen die Klemmelemente geschoben. Durch Anziehen der Schraubbolzen 11 werden die Flansche 3 gegeneinander verspannt; hierdurch erfolgt die vorstehend erläuterte Verformung der Klemmelemente 4, die dadurch eine kraftschlüssige und bei angeschärftem innenliegenden Klemmrad 4a auch eine formschlüssige Verbindung zwischen Flansch und Rohrende herstellen. Für die Funktion der neuen Rohrerbindung ist es nicht erforderlich, daß die Flansche 3 plan gegen die Kammerteile 5 anliegen; wesentlich ist alleine, daß beim Anziehen der Schraubbolzen 11 die Klemmelemente 4 in axialer Richtung von den Kammerteilen 5 beaufschlagt werden.

Figur 2 zeigt zwei verschiedene, auf ein Rohrende 1 aufgeschobene Klemmelemente 4 im Querschnitt, wobei von den Klemmelementen jeweils nur die obere Hälfte des Schnittes dargestellt ist. Beide Ausführungsbeispiele zeigen einen ringförmigen Teil 41, der im Querschnitt ein bogenförmiges Profil aufweist und ein Kreisringsegment gleicher Dicke bildet, das durch einen Radius R bestimmt ist. Der Segmentwinkel φ ist bei dem linken Klemmelement 4 etwas größer als bei dem rechten Klemmelement. Die Länge des ringförmigen Teils 41 ist jeweils mit L bezeichnet. Das rechte Klemmelement 4 ist mit seinem bogenförmigen Profil unter einem spitzen Winkel α zu der Ebene 42 des Klemmelementes 4 geneigt.

Figur 3 zeigt eine abgewandelte Ausführungsform eines Klemmelementes, bei dem der ringförmige Teil 41 aus einem äußeren Kreisring 44 konstanter Breite c besteht, an dem nach innen gerichtete, angenähert tangential zum lichten Innendurchmesser des Klemmelementes verlaufende Laschen 45 hängen. Die Laschen 45 sind durch entsprechend angeordnete Schlitze gebildet und verjüngen sich zu ihrem freien Ende hin keilförmig.

Figur 4 zeigt einen Querschnitt durch die Ausführungsform gemäß Figur 3.

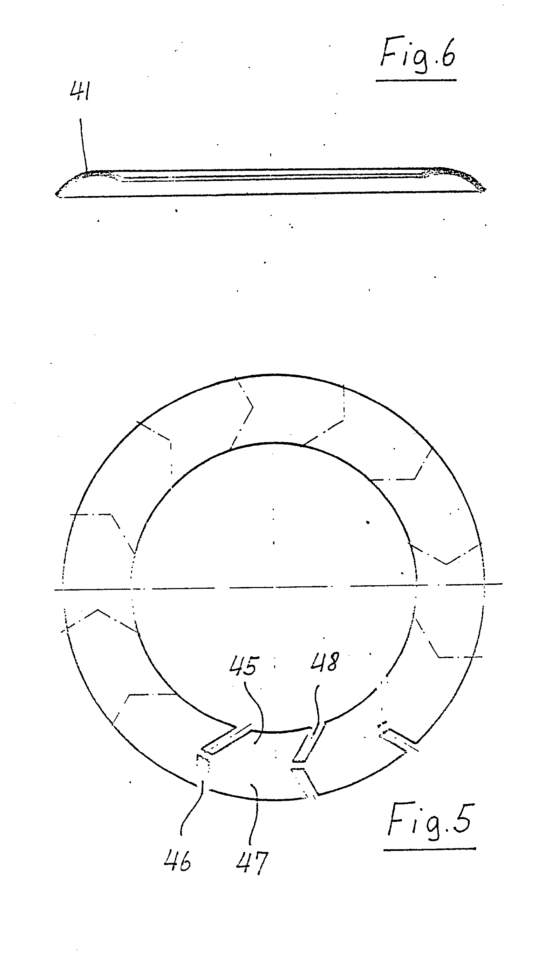

Bei dem in Figur 5 dargestellten Klemmelement trägt der ringförmige Teil 41 an seinem Außenumfang durch Schlitze 46 gebildete Laschen 47, die angenähert tangential zum Außendurchmesser des Klemmelementes verlaufen. Dabei läuft jeweils ein radial außenliegender Schlitz 46 mit einem radial innenliegenden Schlitz 48 pfeilspitzartig zusammen, wobei die so gebildeten äußeren und inneren Laschen 47, 45 nur im Bereich der Pfeilspitze in Umfangsrichtung aneinander hängen.

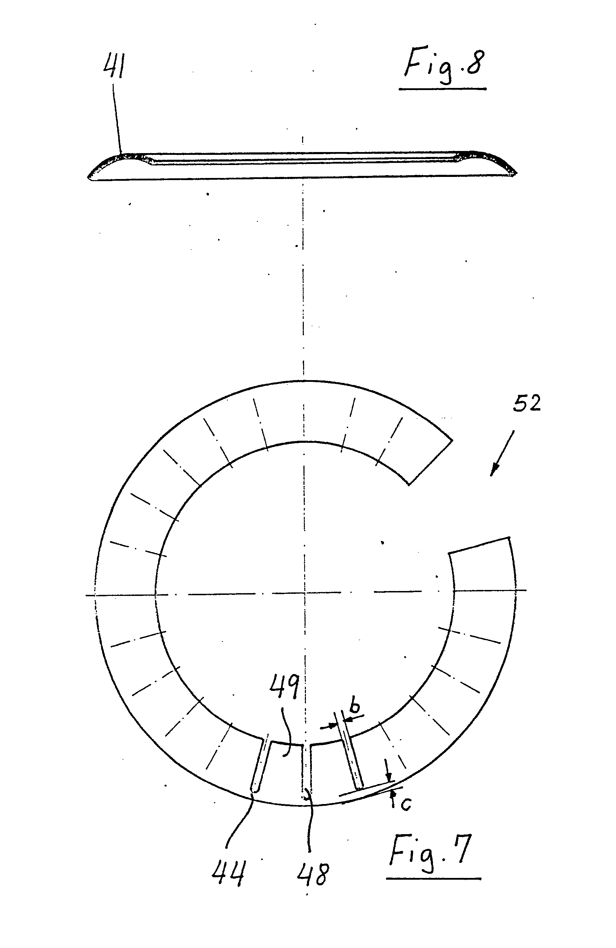

Bei dem Klemmelement gemäß Figur 7 besteht der ringförmige Teil 41 aus einem schmalen äußeren Kreisring 44, an dem nach innen gerichtete Radiallaschen 49 hängen. Die Breite b der Schlitze 48 beträgt etwa 1 bis 2 mm und ist damit etwa gleichgroß wie die Breite c des Kreisringes 44. Das hier dargestellte Klemmelement kann zusätzlich an einer Stelle 52 aufgeschnitten sein.

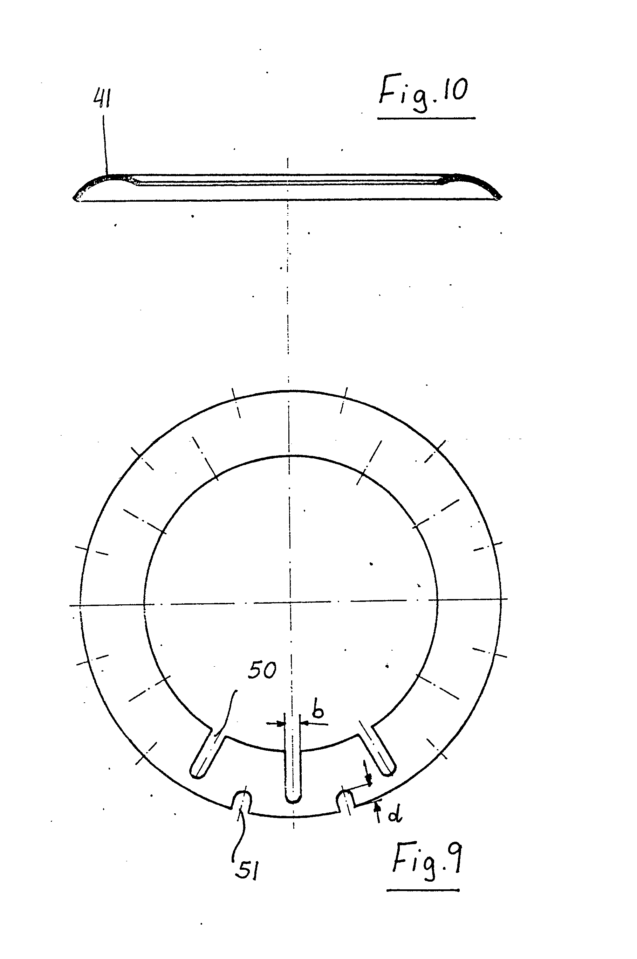

Bei dem in Figur 9 dargestellten Klemmelement weist der ringförmige Teil 41 innere Radialschlitze 50 und jeweils dazwischen angeordnete äußere Einschnitte 51 auf, wobei die Länge der Radialschlitze 50 um eine Mehrfaches größer ist als die Radialtiefe d der Einschnitte 51. Die Breite b der Radialschlitze 50 beträgt etwa 4 bis 6 mm, vorzugsweise 5 mm.

## Patentansprüche

1. Rohrverbindung zwischen zwei stumpf miteinander zu verbindenden Rohrenden, mit einem lose auf das eine Rohrende (1, 2) aufgeschobenen Flansch (3) oder dergleichen, der axial gegen ein Widerlager verspannbar ist und eine Klemmkammer (7) aufweist, in die ein Klemmelement (4) eintaucht, das sich mit einem radial innenliegenden Klemmrand (4a) auf dem Rohrende (1, 2) abstützt, hinsichtlich eines radial außenliegenden Klemmrandes (4b) von einer Klemmfläche (7a) der Klemmkammer (7) übergriffen wird und in axialer Richtung so ausgeformt ist, daß eine das Klemmelement (4) beaufschlagende axiale Druckkraft zu einer Vergrößerung des Außendurchmessers und zu einer Verkleinerung des Innenduchmessers des Klemmelementes (4) führt, dadurch gekennzeichnet, daß der ringförmige Teil (41) des Klemmelementes (4) im Querschnitt ein bogenförmiges Profil aufweist.

2. Klemmelement nach Anspruch 1, dadurch gekennzeichnet, daß das bogenförmige Profil durch einen Radius (R) bestimmt ist und ein Kreisringsegment gleicher Dicke bildet.

3. Klemmelement nach Anspruch 1 oder 2, dadurch gekennzeichnet, daß das bogenförmige Profil zu der Ebene (42) des Klemmelementes (4) unter einem spitzen Winkel (α) geneigt ist.

4. Klemmelement nach einem der vorhergehenden Ansprüche, dadurch gekennzeichnet, daß sein radial innenliegender Klemmrand (4a) scharfkantig ausgebildet ist.

5. Klemmelement nach Anspruch 1, dadurch gekennzeichnet, daß der ringförmige Teil (41) aus einem äußeren Kreisring (44) konstanter Breite (c) besteht, an dem nach innen gerichtete, angenähert tangential zum lichten Innendurchmesser des Klemmelementes verlaufende Laschen (45) hängen (Fig. 3).

6. Klemmelement nach Anspruch 5, dadurch gekennzeichnet, daß sich die Laschen (45) zu ihrem freien Ende hin keilförmig verjüngen.

7. Klemmelement nach einem der vorhergehenden Ansprüche, dadurch gekennzeichnet, daß sein ringförmiger Teil (41) an seinem Außenumfang durch Schlitze (46) gebildete Laschen (47) trägt (Fig. 5).

8. Klemmelemente nach Anspruch 7, dadurch gekennzeichnet, daß die Laschen (47) angenähert tangential zum Außendurchmesser des Klemmelementes verlaufen.

9. Klemmelement nach Anspruch 8, dadurch gekennzeichnet, daß jeweil sein radial außenliegender Schlitz (46) mit einem radial innenliegenden Schlitz (48) pfeilspitzartig zusammenläuft, wobei die so gebildeten äußeren und inneren Lachen (47, 45) nur im Bereich der Pfeilspitze in Umfangsrichtung aneinander hängen (Fig. 5).

10. Klemmelement nach einem der Ansprüche 1 bis 4, dadurch gekennzeichnet, daß der ringförmige Teil (41) aus einem schmalen äußeren Kreisring (44) besteht, an dem nach innen gerichtete Radiallaschen (49) hängen (Fig. 7).

11. Klemmelement nach Anspruch 10, dadurch gekennzeichnet, daß die Breite (b) der Schlitze (48) etwa 1–2 mm beträgt.

12. Klemmelement nach Anspruch 10 oder 11, dadurch gekennzeichnet, daß die Breite (c) des Kreisringes (44) etwa 1–2 mm beträgt.

13. Klemmelement nach einem der Ansprüche 1 bis 4, dadurch gekennzeichnet, daß der ringförmige Teil (41) innere Radialschlitze (50) und jeweils dazwischen angeordnete äußere Einschnitte (51) aufweist (Fig. 9).

14. Klemmelement nach Anspruch 13, dadurch gekennzeichnet, daß die Länge der Radialschlitze (50) um ein Mehrfaches größer ist als die Radialtiefe (d) der Einschnitte (51).

15. Klemmelement nach Anspruch 13 oder 14, dadurch gekennzeichnet, daß die Breite (b) der Radialschlitze (50) etwa 4–6 mm, vorzugsweise 5 mm beträgt.

16. Klemmelement nach einem der vorhergehenden Ansprüche, dadurch gekennzeichnet, daß sein ringförmiger Teil (41) aufgeschnitten (52) ist (Fig. 7).

## Claims

1. Pipe coupling between two pipe ends to be butt connected to one another, with a flange (3) or the like which can be pushed loose onto the one tube end (1, 2), can be tightened axially against an abutment and has a clamping chamber (7) into which there fits a clamping element (4) which bears with a radially inner clamping edge (4a) on the tube end (1, 2), being overlapped relative to a radially outer clamping edge (4b) by a clamping surface (7a) of the clamping chamber and being so formed in the axial direction that an axial compressive force acting on the clamping element (4) leads to an enlargement of the outer diameter and a reduction of the inner diameter of the clamping element (4), characterized in that the annular part (41) of the clamping element (4) has an arcuate profile in cross-section.

2. Clamping element according to claim 1, characterized in that the arcute profile is determined by a radius (R) and forms an annular segment of uniform thickness.

3. Clamping element according to claim 1 or 2, characterized in that the arcuate profile is inclined to the plane (42) of the clamping element (4) at an acute angle α.

4. Clamping element according to one of the preceding claims, characterized in that its radially inner clamping edge (4a) is formed as a sharp edge.

5. Clamping element according to claim 1, characterized in that the annular part (41) consists of an outer annulus (44) of constant width (c) from which depend inwardly directed tongues (45) extending approximately tangential to the clear inner diameter of the clamping element (Fig. 3).

6. Clamping element according to claim 5, characterized in that the tongues (45) taper in wedge manner to their free ends.

7. Clamping element according to one of the preceding claims, characterized in that its annular part (41) carries tongues (47) on its outer periphery formed by slits (46) (Fig. 5).

8. Clamping element according to claim 7, characterized in that the tongues (47) extend approximately tangential to the outer diameter of the clamping element.

9. Clamping element according to claim 8, characterized in that each radially outer slit (46) converges in the manner of an arrowhead towards a radially inner slit (48), the outer and inner tongues (47, 45) thus formed being connected to one another in the peripheral direction only in the region of the arrow tip (Fig. 5).

10. Clamping element according to one of claims 1 to 4, characterized in that the annular part (41) consists of a narrow outer annulus (44), from which depend inwardly directed radial tongues (49) (Fig. 7).

11. Clamping element according to claim 10, characterized in that the width (b) of the slits (48) amounts to about 1–2 mm.

12. Clamping element according to claim 10 or 11, characterized in that the width (c) of the annulus (44) amounts to about 1–2 mm.

13. Clamping element according to one of claims 1 to 4, characterized in that the annular part (41) comprises inner radial slits (50) and outer notches (51) arranged therebetween (Fig. 9).

14. Clamping element according to claim 13, characterized in that the length of the radial slits (50) is a plurality of times greater than the radial depth (d) of the notches (51).

15. Clamping element according to claim 13 or 14, characterized in that the width (b) of the radial slits

(50) amounts to approximately 4–6 mm, preferably 5 mm.

16. Clamping element according to one of the preceding claims, characterized in that its annular part (41) is split (52) (Fig. 7).

## Revendications

1. Dispositif de raccordement entre les extrémités de deux tubes (1, 2) à raccorder bout à bout comportant une bride (3), ou une pièce analogue, enfilée librement sur l'une des extrémités des tubes (1, 2), bride qui peut être serrée axialement contre une pièce de butée et qui présente une chambre de serrage (7) dans laquelle s'engage un élément de serrage (4) qui prend appui par un bord de serrage radial intérieur (4a) sur l'extrémité du tube (1, 2), dont un bord de serrage radial extérieur (4b) est entouré par une surface de serrage (7a) de la chambre de serrage (7) et qui présente en direction axiale une forme telle qu'une force de serrage axiale exercée sur cet élément de serrage (4) entraîne une augmentation du diamètre extérieur et une diminution du diamètre intérieur dudit élément de serrage (4), caractérisé en ce que la partie annulaire (41) de cet élément de serrage (4) présente une coupe un profil en forme d'arc de cercle.

2. Elément de serrage conforme à la revendication 1, caractérisé en ce que ce profil en forme d'arc de cercle est déterminé par un rayon (R) et forme un segment d'anneau circulaire d'épaisseur constante.

3. Elément de serrage conforme à l'une des revendications 1 ou 2, caractérisé en ce que le profil en forme d'arc de cercle est incliné d'un angle aigu (α) par rapport au plan (42) de l'élément de serrage (4).

4. Elément de serrage conforme à l'une quelconque des revendications précédentes, caractérisé en ce que son bord de serrage radial intérieur (4a) est à arête vive.

5. Elément de serrage conforme à la revendication 1, caractérisé en ce que la partie annulaire (41) est constituée par un anneau circulaire (44) de largeur constante (c) auquel sont attachées des pattes (45) orientées vers l'intérieur et s'étendant sensiblement jusqu'à tangenter le cercle intérieur de passage de l'élément de serrage.

6. Elément de serrage conforme à la revendication 5 ci-dessus, caractérisé en ce que les pattes (45) se rétrécissent vers leur extrémité libre en forme de coins.

7. Elément de serrage conforme à l'une quelconque des revendications ci-dessus, caractérisé en ce que sa partie annulaire (41) porte sur sa périphérie extérieure des pattes (47) formées par des fentes (46) (figure 5).

8. Elément de serrage conforme à la revendication 7 ci-dessus, caractérisé en ce que les pattes (47) s'étendent jusqu'à tangenter sensiblement le cercle extérieur de l'élément de serrage.

9. Elément de serrage conforme à la revendication 8 ci-dessus, caractérisé en ce que chaque patte radiale extérieure (46) converge avec une fente radiale intérieure (48) pour former une sorte de pointe de flèche, les pattes extérieures et intérieures (47, 45) ainsi formées n'étant raccordées les unes aux autres dans la direction circonférentielle que dans la zone de la pointe de la flèche (figure 5).

10. Elément de serrage conforme à l'une quelconque des revendications 1 à 4 ci-dessus, caractérisé en ce que la partie annulaire (41) est constituée par un anneau circulaire extérieure étroit (44) auquel sont attachées des pattes radiales (49) orientées vers l'intérieur (figure 7).

11. Elément de serrage conforme à la revendication 10, caractérisé en ce que la largeur (b) des fentes (48) est d'environ 1 à 2 mm.

12. Elément de serrage conforme à l'une des revendications 10 ou 11, caractérisé en ce que la largeur (c) de l'anneau circulaire (44) est d'environ 1 à 2 mm.

13. Elément de serrage conforme à l'une des revendications 1 à 4, caractérisé en ce que la partie annulaire (41) présente des fentes radiales intérieure (50) et des entailles extérieures (51) disposées respectivement entre deux fentes intérieures (figure 9).

14. Elément de serrage conforme à la revendication 13, caractérisé en ce que la longueur des fentes radiales (50) a une valeur plusieurs fois multiple de celle de la profondeur radiale (d) des entailles (51).

15. Elément de serrage conforme à l'une des revendications 13 ou 14, caractérisé en ce que la largeur (b) des fentes radiales (50) est d'environ 4 à 6 mm, et de préférence 5 mm.

16. Elément de serrage conforme à l'une des revendications précédentes, caractérisé en ce que sa partie annulaire (41) présente une coupure (52) (figure 7).

Fig.1

0 157 204

Fig.2

_Fig.4_

42

41

α

_Fig.3_

4

4b

4a

45

44

c

Fig.6

41

Fig.5

45   48

46   47

41

*Fig.8*

52

49

*b*

44    48

*c*

*Fig.7*

41

Fig.10

50

b

d

51

Fig.9